# EUROPEAN PATENT APPLICATION

(11) **EP 1 118 949 A1**
(43) Date of publication of application: **25.07.2001**
(21) Application number: 00410004.6
(22) Date of filing: 21.01.2000
(51) Int. Cl.: G06F 17/30

(54) **Process and apparatus for allowing transaction between a user and a remote server**

(71) Applicant: Hewlett-Packard Company, A Delaware Corporation, Palo Alto, CA 94304 (US)
(72) Inventor: Brebner, Gavin, 38410 Saint Martin d'Uriage (FR)
(74) Representative: Lloyd, Richard Graham

(57) **Abstract**

A process for handling communications and transactions with at least one server that is prepared to accept at least one associated command. A local agent includes means for receiving an abstract request from a user, that is to say a request that only includes partial information regarding the particular service that is desired. The local agent includes means for analysing that abstract request and for mapping it to one corresponding server, and one particular command for accessing that server. The local agent then constructs an aggregate request that is based on that particular command, and further including additional information that the agent extracts from a local profile. This results in an aggregate request that is transmitted through the network to the corresponding server. The server may then process the aggregate request and provides a comprehensive response which, when received by the local agent, can then be forwarded to the user for the purpose of completing the transaction. Alternatively, the local agent may determine the occurrence of a predetermined condition of insufficient resources for initiating the preparation of a contextual request for transaction.

## Description

### Technical field of the invention

The invention relates to communication systems and more particularly to a process for facilitating a transaction between a user and a remote server.

### Background art

The constant progress of the Information Handling System (I.H.S.) technology and that of the communication systems, particularly with the explosion of the Internet and intranet networks, have resulted in the development of an era of information. With a single personal computer, one can get a connection to the Internet network, and have direct access to a wide range of information and services, including electronic business applications. However, since any computer that is connected to the network is an information provider, the amount of information available is dramatically increasing, as is the difficulty for everybody to get access to the huge resources that are available. Typically, it is not rare that an Internet consumer has to surf through dozens of web sites and Uniform Resources Locator (URL) addresses and consult many pages before they get a direct access to the particular information they need. The web sites are continuously being developed and, even for one unique product manufacturer or service provider, the number of pages composing a web site tends to increase. The concept of agents and search engines - more or less sophisticated - has been introduced for improving the access to the information and for giving the possibility to the customer to delegate some specific tasks to automatic modules in order to simplify part of the searching process.

US 5,877,759 assigned to Netscape Communications Corp. and entitled *Interface for user/agent interaction* shows an example of a user interface providing some assistance to the client user interface and an interface that is centred on autonomous processing of whole tasks rather than sequences of commands, and the detection of contexts requiring the launch of a process.

WO 98/47250 PCT application assigned to IBM Corp. and entitled *Apparatus and method for communicating between an intelligent agent and client computer process using disguised messages* illustrates an agent for the communication with a client and which uses a selector known by both parties to generate and interpret messages and thereby to effectively disguise confidential information transmitted in the message from third parties.

WO 98/43146 application assigned to IBM Corp., and entitled *Intelligent agent with negotiation capability and method of negotiation therewith* is another example of an improvement brought to a so-called intelligent agent.

Consider for example the use of the Internet network to access a computer product manufacturer or accessory server, it is clear that a non informed user - i.e. one without any particular expertise in the field of computer technology - still faces difficulties when he wishes to upgrade his computer, or buy new accessories. Indeed, to achieve this, he needs to gather essential information such as the serial and model numbers of this computer, the hard disk capacity and characteristics, the video card model, the type of chipset, the release of the BIOS... Such information is certainly not easy to gather for the non-informed user, but is none-the-less essential if the computer manufacturer is to make an offer correctly tailored to the user.

The size of the Internet network, while guaranteeing the diversity of information and services that are available, tends to become a barrier for non informed people who try to find their way through the web jungle and, certainly represents a potential waste of time for everybody, informed or not.

There is a definite desire in the public to facilitate the access to the huge amount of resources that are available on the Internet network.

### Summary of the invention

It is an object of the present invention to carry out a new arrangement that substantially facilitates the access to the resources that are available on a network, such as an Internet or Intranet network, and particularly for users and customers that are not particularly versed in the technology of computers.

This object is solved by the present invention that is based on a local agent for handling communications with at least one server that is prepared to accept at least one associated command. The local agent includes means for receiving an abstract request that is entered by a user, that is to say a request that is assumed to contain only partial information that is needed regarding the particular service that is desired. The local agent has access to a list of servers and includes means for analysing that abstract request and for mapping it to one corresponding server, and one particular command for accessing that server. The local agent then constructs an aggregate request transaction based on that particular command, and which further includes the additional information that the agent extracts from a local profile. This results in an aggregate request that is transmitted through the network to the identified mapped server. The server can then process the aggregate request and provides a comprehensive response which, when received by the local agent, is forwarded to the user for the purpose of completing the transaction. A request from the user in the context of his or her unique environment has thus been translated to the fully detailed request required by the manufacturer who then constructs the appropriate user-tailored response.

Preferably, the local agent handles the HTTP standard protocol and the aggregate request is a GET request complying with the HTTP standard which comprises a query string including information based on the abstract user's request as well as the additional information extracted from the profile file. HTTP is attractive as it is well known by firewalls and other internet nodes, and thus can pass where other protocols may be blocked. The use of the HTTPS [RFC 2660] protocol is a simple extension to the approach, and which permits secure and private communication of the profile data between user and manufacturer.

In one embodiment, the local agent includes means for collecting internal parameters that are extracted from the basic information handled by the System Management Basic Input Output System (SMBIOS). This can be done directly by accessing the tables constructed in RAM by the boot code or by means of an executable file accessing the Distributed Management Interface (DMI) or Windows Management Instrumentation (WMI). By constructing a machine profile via these resources, traditionally used for corporate asset management, the local communication agent 11 allows the user to formulate an abstract request such as "*I need some memory for my computer*", which can then be processed and enriched with additional details needed for the particular request being considered: i.e. the type of the memory, the memory speed characteristics, the model of PC, and so on.

Preferably, the abstract request is received by the local agent in natural language and the profile contains both technical data extracted from the BIOS information, and user's profile data. Variants of the user interface e.g. one using the wizard approach can be layered on top of a natural language foundation.

In one embodiment, the local agent comprises means for detecting some predetermined conditions of insufficient system resources, such as a lack of memory for instance. These conditions are mapped to one particular Accessories server, with one corresponding command, such as a BUY command with appropriate arguments. Upon the detection of those predetermined lack of resources conditions, which may occur on installation of a new software package, the local agent is automatically launched. A request for transaction is then prepared and transmitted to the identified Accessories server for the purpose of submitting a transaction to the user.

Preferably, the server's response is formatted in accordance with the Hypertext Markup Language (HTML) standard, and the local agent directly pushes the response received from the Server, e.g. the Accessories server, into a web browser for the purpose of allowing the user to complete the transaction. This arrangement permits the agent to automatically execute the first steps of the negotiation without involving the user who nevertheless gets control of the negotiation at the final stage when the local communication agent pushes the last proposal into the web browser. The user keeps the control of the last but essential step of the transaction while all the preceding ones that require the gathering of a great number of pieces of information, can be automatically handled by the local agent.

The close interaction between the web browser and the local agent permits to reduce the size and complexity of the latter, thus facilitating its download over the internet.

More particularly, the local agent includes means for regularly accessing a service list server and for downloading a file comprising the authorized list of servers to which the abstract request will be mapped.

### Description of the drawings

Embodiments of the invention will now be described by way of examples only, with reference to the accompanying drawings, wherein:

Figure 1 illustrates the basic architecture where a local agent in a user's computer can access different servers and different transactions.

Figure 2 is a flow chart illustrating the process that is executed by the local agent 11.

Figure 3 is a flow chart showing the messages exchanged between the local agent and one server, in a first embodiment involving an accessory server.

Figure 4 shows a second embodiment involving a Service list server for maintaining a list of servers that will be used during the mapping process of the local agent.

Figure 5 is a flow chart illustrating, in the second embodiment, the different messages being exchanged between the local agent 11, a Service list server 5 and a travel agency server.

### Description of the preferred embodiments of the invention

As will be shown below, the negotiation process is handled by means of a so-called local communication agent that is embodied in the form of Java code for instance. In view of the small size of the latter, it is even possible to contemplate the downloading of the local agent via the internet. However, it is clear that the preferred embodiment is where the code has been loaded into the user's computer during the manufacturing process. While the local agent may be used for accessing different kinds of service providers and servers, the description below will focus on the example of the access of an Accessories server for the purpose of upgrading the user's computer. It will be shown, with that example, how easy a transaction can be made between the user who wishes to buy an accessory for his computer and a server, even if that user is not well versed in computer technology.

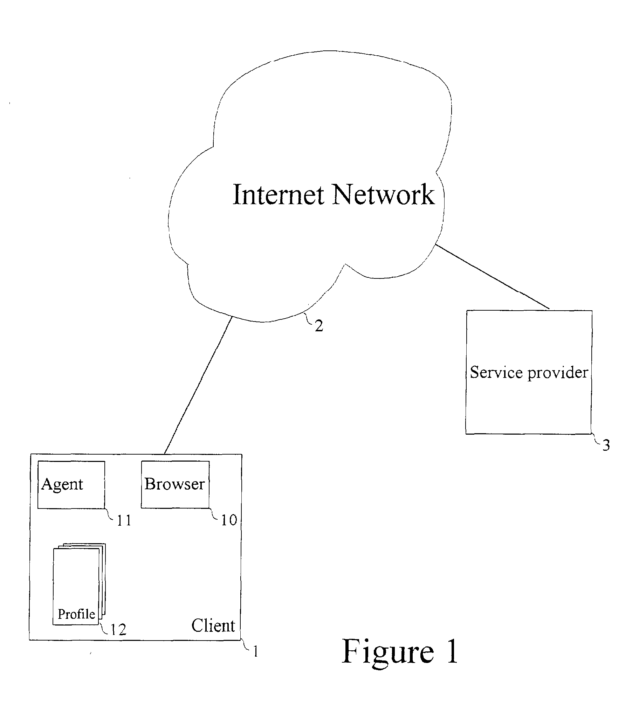

As shown in figure 1, a user's computer 1 is connected to a communication network 2, such as an Internet or Intranet network for instance. In this way, he may access to multiple different service servers 3 and 4. For example, server 3 is an Accessories service set up by a manufacturer or reseller, which is prepared to accept and process purchasing commands, while server 4 may be directed to a travel agency service dedicated to receive air-flights booking or reservation commands.

The user's computer 1 - or client - includes a local communication agent 11 which can access a local service list 13 for the identification of a set of servers; and can interact with a web browser 15. Web browser 15 is a conventional browser such as, for instance, *Internet Explorer 4* or 5 (manufactured by Microsoft Corp.) or *Netscape Explorer* (manufactured by Netscape Communications Corp. An internal system service 12 is used for automatically gathering technical parameters regarding the user's PC, and for storing them into a profile file 14 as will be described hereinafter.

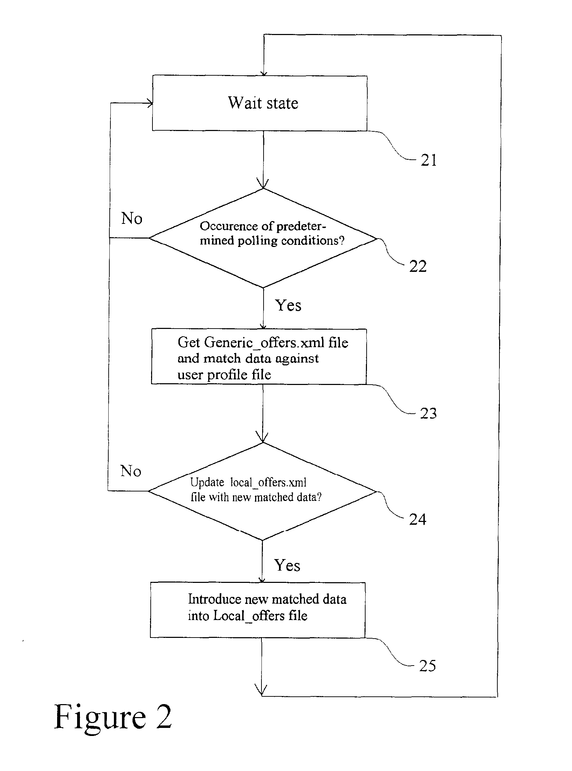

With respect to figure 2 there is shown the basic process that is executed by the local communication agent 11 for automatically constructing a contextual request for transaction. In step 21, the local agent waits for a user's action, for instance the actuation of one predetermined key, or clicking on an icon. In response to the user's action, local communication agent 11 causes the display of a window where the user may enter a text, which may be expressed, in one embodiment, in natural language. However, in another embodiment, the local agent 11 may use a wizard interface, similar to those known from the Windows 98 operating system marketed by Microsoft Corp. In the preferred implementation the window is actually a standard web browser, which interacts with the agent as a web server. The user interface in this case is written in HTML code supplied to the web browser when the initial connection is made. In an alternative embodiment, the user interface HTML can be located on a remote server and not locally. This permits easy integration of the approach in to the existing web structures. Whether the HTML code is local or remote, the action of the agent on receipt of a request is identical in all respects.

Whatever the particular way being used for entering the request for transaction, it should be noticed that, generally, the request is not sufficient since it normally lacks the essential data needed for processing the transaction; indeed the goal of the process hereinafter described is that as many details as possible can be ignored by the user. In the case of an Accessory purchasing request, for instance, the normal request would require that the user enters the precise characteristics of the accessory which is desired, which might depend upon some internal characteristics of his machine.

The process which will be described in detail hereinafter shows how the local communication agent 11 allows the user to enter only partial information - referred to in the following as an abstract request since it only contains some basic incomplete information - and process it for completing the transaction.

In step 22, the abstract request entered by the user is analysed by local communication agent 11. Natural language analysing techniques can be used for that purpose among other existing techniques. These will not be further described, however it is sufficient to notice that the local communication agent analyses the user's abstract request and searches the key words that are therein incorporated, for the purpose of mapping them to one particular server extracted from service list 13, and to one particular command that that server is prepared to process. It should be noticed that, normally, one server is prepared to access different kinds of commands, each one having different possible arguments. For instance, should the user formulate the following abstract statement *"I want to buy memory for my computer",* the local agent 11 then understands, in step 22, that an accessory server is appropriate, with the identification of a particular buy command, having the following attribute or argument: *memory.* Basically, the local agent includes means for translating the abstract request that is formulated by the user into the identification of one particular server, and one particular command with the appropriate arguments.

It should be noticed that, in one alternative embodiment, the local communication agent 11 may be initiated without any action from the user. Indeed, it may be advantageous to fit agent 11 with means for detecting the occurrence of some predetermined conditions which are representative of a state of insufficient system resources, e.g. a lack of memory resources. In addition, review of the machine resources after installation of new software is both a simple but effective approach. Certain software is known to require or benefit from particular hardware resources, and the user who installs new applications on a machine can be expected to be receptive to the information that new software may require additional resources. Information about software installed on a Microsoft Windows machine is conveniently concentrated in the registry, which can be searched to obtain a list of software installed.

Upon the detection of those predetermined conditions, the local agent can be automatically launched or triggered without any request from the user, and the particular condition is mapped to a particular server, for instance an Accessories server, with a particular command, for instance a BUY command, to which is associated the appropriate arguments (memory for instance). It should be noticed that the local agent may even use the internal registers handled by the operating system, for instance Windows operating system, to evaluate a need in the system resources in view of the amount of software applications being installed. This results in an automatic resources evaluation for the purpose of guaranteeing the user an optimum configuration and operating of the user's computer.

In accordance with the particular command identified in step 22, either from the user's abstract request or alternatively from the detection of a lack of system resources condition, local agent 11 then prepares the construction of an aggregate request for transaction, in step 23. To achieve this, local agent 11 calls the system service 12 for collecting some data representative of the configuration of the user's computer. In one particular embodiment of the invention, System service 12 maintains a profile on the machine, constructed using a piece of software - a so called *sysinfo.exe* executable file - which is launched for accessing internal technical parameters which are loaded into the BIOS layer. The *sysinfo.exe* file will normally be installed into the user's computer at the same time as the agent, and will be executing when the agent starts, e.g. when the machine boots. In the case of a agent being downloaded from the Internet network, for instance under the form of a Java applet, the execution of the latter will first result in the installation of the *sysinfo*.*exe* application for the purpose of gathering the internal parameter of the user's computer. As known by the skilled man, the use of Java applets in this manner requires them to be signed, and for the user to explicitly give permission for the applet to go outside the "sandbox". Because of this, an applet approach, while possible, is not the preferred implementation.

Once installed, the *sysinfo.exe* executable file extracts system information directly from the SMBIOS tables, or interrogates the Distributed Management Interface (DMI, or Windows Management Instrumentation (WMI) as known from Microsoft. As known by the skilled man, the DMI interface is an Application Programming Interface (API) that consists of a set of routines that are called for accessing the information stored within the BIOS layer. Basic information relating to the DMI programming interface can be found at the address http://www.dmtf.org/spec/html.

By using the DMI or WMI interfaces, or by accessing directly the SMBIOS level, the *sysinfo.exe* executable file accesses the different tables contained in the System Management BIOS (SMBIOS) for the purpose of reporting comprehensive information regarding the user's configuration, and required for completing a request for transaction. Such information includes the type of processor, the type of chipset, the number of hard disk drives, the particular graphic card being used, the serial number of the display, the reference of the operating system and so on

Once the different relevant parameters are gathered from the DMI or WMI interface, the local communication agent then constructs, in step 23, an aggregate request containing the command to which the user's abstract request was previously mapped. In addition to that command, the request for transaction is completed with the relevant information that is reported by the *sysinfo.exe* executable file, and useful for processing the transaction. It should be noticed that while this first embodiment completes the user's abstract request with the additional data which is extracted from the SMBIOS tables, the local agent may, in another embodiment, add additional data which may be extracted from a user's profile and mix the latter with the technical data representative of the user's computer configuration. This finally produces comprehensive information that is useful for processing a request for transaction.

In step 24, the aggregate request is transmitted through the network. It should be noticed that the local communication agent 11 may take advantage of the wide generalization of the Internet protocols, and particular the use of the Hypertext Transfer Protocol (HTTP). In the preferred embodiment, the local agent issues a request for transaction which is embedded into a HTTP GET request which is recognized at every level, and particularly by every Proxy. The particular format of the HTTP GET request is defined in the well-known rules laid down in the Request For Commands (RFC) 2.6.1.6, which are available at the following address http://www.w3.org/protocols. Since those rules are well known to the skilled man, they will not be elaborated further on. Use of the secure version of HTTP, HTTPS (RFC 2660) is an extension, which enables the protection of the users privacy by encrypting the profile information in transit.

In one embodiment, the HTTP GET request comprises a query string which is introduced by a question mark, and which details the aggregate information that was assembled in step 23. Considering the particular example of a BUY request for an argument *memory* which is to be processed by the local agent, and transmitted to an Accessories server, the query string is sent to accompany the request for purchasing memory, by means of the following HTTP GET request:

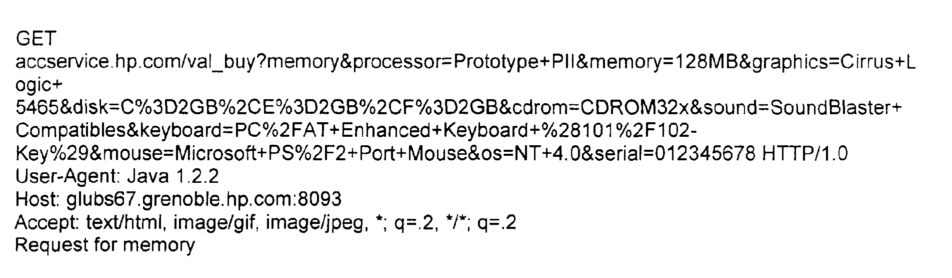

As it appears above, the HTTP GET request's query string starts with the particular command identified during step 22. In addition, the query string details information taken from the PC profile, constructed automatically using the *sysinfo.exe* executable file. Local agent 11 can then construct an aggregate and comprehensive request that contains all the information and the details that may be useful for processing the BUY request, with the BUY command and arguments.

In step 24, that aggregate request is transmitted to the server, that is to say Accessories Server 3 of figure 1.

Accessories server 3 receives the aggregate request and processes it for the purpose of elaborating a transaction proposal. To achieve this, it extracts the different elements contained into the query string, the BUY command accompanied with the associated arguments, for the purpose of elaborating a full and comprehensive proposal for transaction. That proposal may take different forms but, in one preferred embodiment, the server takes advantage of the existence of a web browser in most computers. Therefore, when the proposal has been elaborated by the Accessories server 3, the latter is embodied into a Hypertext Markup Language (HTML) page that comprises all the elements of the transaction proposal.

That HTML page is received by the local communication agent, in step 25, which can then push it into the web browser 15 for the purpose of displaying it to the user. It therefore appears that the local agent 11 handles all the steps of the negotiation process that are necessary: the determination of the precise server, the command, and the extraction of the appropriate parameters from the profile relevant to the particular transaction being considered. Only when the negotiation process reaches the step where an accurate proposal can be made to the user with all the elements being determined, then the local agent uses the web browser for a manual operation from the user, so as to let the latter decide whether or not to accept the result of the negotiation process. All the preceding steps are automatically executed for the purpose of facilitating the access to the transaction. It should be understood that the interaction developed between the web browser and the local agent entails a significant advantage. It permits to reduce the size, the complexity and the cost of the software code required to implement the local agent, since a web browser is generally available on any machine. The reduction in the size of the local agent can even make it feasible to download the latter via an Internet network. More importantly, the use of a web browser as the user interface tool means that the user, once sending in a request, will receive the response in the same window - no new window will be opened. In addition, as the user already is within the web browser, transferring to "manual" web-browsing mode to accept a purchase, for example, is automatic.

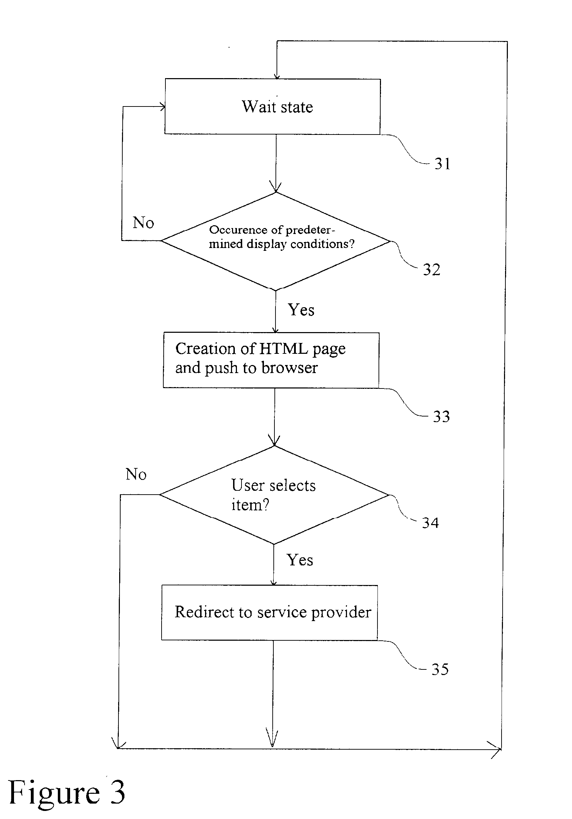

Figure 3 illustrates the different messages that are exchanged when processing the transaction executed by the local communication agent 11. Upon request of the user, as referenced by arrow 31, the agent constructs the comprehensive aggregate request that is transmitted to the Accessory server, as shown by arrow 32. The Accessories server can then process the aggregate request that is based on the abstract user's request, and further comprises the additional details that are extracted from the user's computer profile via the *sysinfo.exe* executable file. The Accessories server can then process the request and transmits a contextual response in an HTML format, as illustrated by arrow 33. Local agent 11 then pushes the HTML response to the web browser, as referenced by arrow 34, and displays it to the user who may or may not complete the transaction.

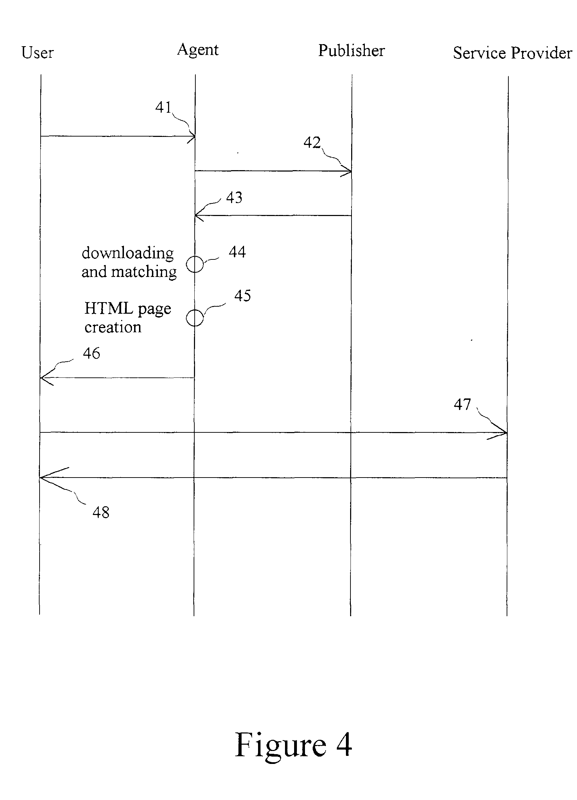

In a second embodiment, the local agent 11 includes a means for regularly downloading a list of the different services that will be used for implementing the user's abstract request. There is also a reference to information that enables the agent to map user requests to these services. This is illustrated in figure 4 which shows the interaction of an additional server - referred to as a Service list server 5 or publisher - (all the unchanged elements keeping their original references) which maintains a list of the different servers, for the purpose of regular downloading of the latter into the local Service list file 13. In one particular embodiment, the list of the servers will comply with the known XML structure which is defined by the World Wide Web Consortium (W3C) and which is associated to Document Type Definition (DTD) file. The DTD file defines the rules for how the elements, attributes, and other data in an XML-encoded profile are defined and logically related. In one embodiment, Accessories server 3 will have used the Service List server 5 to know the location (URL) of the Accessories server, and to obtain information on what request should be mapped to it. The Service List server 5 allows new services to be added, old services to be modified, and even the list location itself to be modified by permitting redirection.

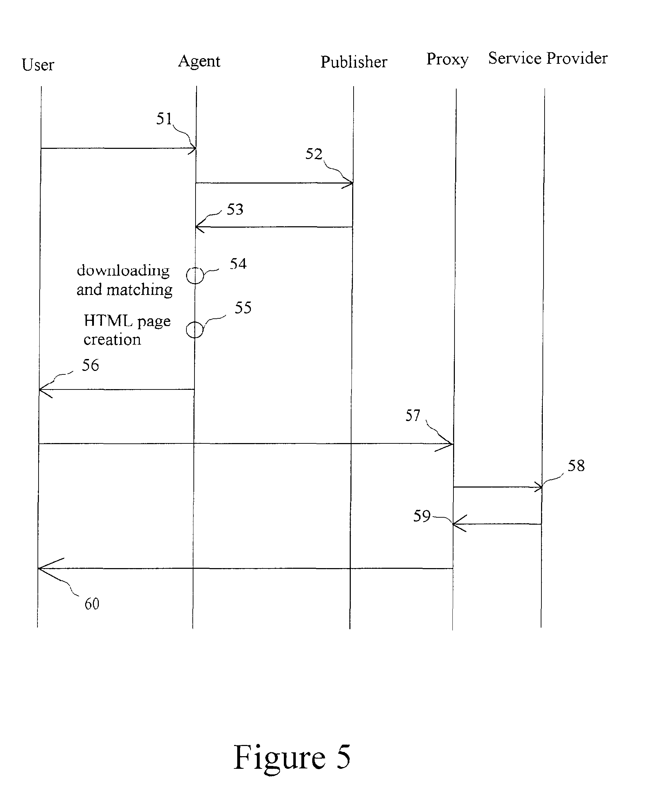

Figure 5 shows the messages that are exchanged in the second embodiment of the invention. For illustrating the wide range of applications of the above-described process, a communication between a local agent and a travel agency server will now be considered.

As for the Accessories server, local Agent 11 may regularly poll the Service List server 5 for getting an up-to-date list of the current servers that will be used for the mapping process of the user's abstract request. The request for downloading the list is illustrated with reference to arrow 35, while the response is represented by arrow 36. The updated list is then transferred within the Service list file 13.

When the user requests the local communication Agent for a transaction, as represented by arrow 51, the user's input is analysed by the local agent. As for the purchase of a new accessory, the request formulated by the user is incomplete with respect to the desired service, i.e. an air flight reservation. Such a formulation could be, for instance, *"I need an air flight reservation for Paris".* The local communication agent then receives that abstract request and analyses it for the purpose of mapping the latter to the appropriate server - the travel agency server - and the appropriate command - a flight reservation.

The local agent then constructs an aggregate request based on the abstract user's request and which further includes additional information which is extracted from a profile file 14 containing information which is relevant to the user's profile. It should be noticed that the profile file should incorporate the user's personal data as well as the internal technical data relevant to the user's computer. The aggregate request may again take the form of a HTTP GET request having a query string based on the user's abstract request and the additional user's profile.

Once prepared, the aggregate request is then forwarded to the predetermined server - the travel agency server - to which the abstract user's request was mapped. This is represented in reference with arrow 52.

Optionally, the travel agency may request some additional data for processing the travel reservation aggregate request. In one embodiment, the travel agency server accesses the Service List Server 5 to obtain the location of other services which may be useful to complete the request, for instance financial servers. The travel agency request and the contextual response from the Service List server 5 are respectively represented by arrows 57 and 58.

Then, similarly as for the Accessories server, the travel agency server may construct a contextual response that contains the proposal for transaction. In that second embodiment, the response is formatted in the HTML format which is received by the local communication agent 11, as shown by arrow 53, which the latter can directly push to the web browser, as represented by arrow 54.

Additionally, while the invention was particularly described in reference with the widely used Internet Standard, with the HTTP protocols such as defined in the RFC 2616 for instance, it should be clear that this was only an example of embodiment and that other protocols can be used.

## Claims

1. Process for assisting a transaction between an user and at least one remote server (3, 4), the or each remote server (3, 4) being prepared to process at least one predetermined command, said process comprising:
- receiving (21) an abstract request formulated at a client computer and containing incomplete information identifying a potential transaction;
- analysing (22) said abstract request and mapping it to a corresponding one of said remote servers (3, 4), and to one of said predetermined command;
- constructing (23) an aggregated request based on said mapped command, enriched with data extracted from a local profile (14);
- transmitting (24) said aggregated request to said corresponding server (3, 4);
- receiving (25) the answer from said corresponding server (3, 4) and displaying the answer to the user for completing the transaction.

2. Process according to claim 1 characterized in that said aggregate request conforms to the Hypertext Transfer Protocol (HTTP), and contains a query string containing both information extracted from the abstract request, and data extracted from said profile (14).

3. Process according to claim 1 or 2 wherein said local profile contains profile data that are representative of platform configuration, and are extracted from information available at the Basic Input Output System (BIOS) level.

4. Process according to claim 3 wherein said profile data are collected by means of interrogation of standardised systems management interfaces present in the client computer.

5. Process according to claim 4 wherein said profile parameters are collected by means of an interrogation via the Distributed Management Interface (DMI) or Window Management Interface (WMI).

6. Process according to claim 1 to 5 wherein said local profile comprises data personal to a particular user.

7. Process according to claim 6 wherein said local agent receives the response from said corresponding server under the form of a Hypertext Markup Language (HTML) page, and pushes it to a web browser for allowing the completion of the transaction between the user and the server.

8. Process according to claim 1 to 7 including regularly downloading a list of servers to which the abstract requests can be mapped thereby permitting modification of the offers that can be made to the user.

9. Process according to claim 1 to 8 wherein the abstract request is formulated in a natural language and a natural language analyser is employed to process the request.

10. Process for allowing a transaction between an user and at least one remote server(s) (3, 4), each of said at least one remote server(s) (3, 4) being prepared to process at least one predetermined command(s),
said process involving the steps of:
- detecting a condition of insufficient resources;
- in response to said insufficient resources detection, automatically identifying one predetermined server (3, 4), and preparing a request for transaction;
- completing said request for transaction with additional data extracted from a local profile (14);
- transmitting said request for transaction to said predetermined server (3, 4);
- receiving the answer from said predetermined server and displaying the answer to the user for completing the transaction.

11. A transaction aid for assisting a transaction between an user and at least one remote server (3, 4), the or each said remote server being prepared to process at least one predetermined command, said transaction aid comprising program code elements for carrying a method as claimed in any preceding claim.

12. A transaction aid as claimed in claim 11 in the form of a personal computer, the program code elements being implemented as a local agent for execution on the computer.

13. A transaction aid as claimed in claim 12 wherein the local agent is preloaded and arranged to execute when the computer is booted.

14. A transaction aid computer program product having program code elements for carrying out a method as claimed in any of claims 1 to 9.

15. A computer program product as claimed in claim 12 in the form of an agent.

16. Use of DMI or WMI interfaces for collecting data representative of a computer profile for achieving an electronic business transaction.

17. An arrangement for providing electronic services comprising:
- an agent located on a client computer for receiving a request and identifying electronic services corresponding to the request;
- a list server for providing a list of services and one or more rules applicable to said services; the agent being arranged to repeatedly download the list of available services from the list server and select from the downloaded list one or more services to be made available to a user of the client computer by comparing a local profile with the rules thereby permitting modification at the list server of the offers that can be made to the user.
